# DEMANDE DE BREVET EUROPEEN

(11) **EP 0 599 701 A1**
(43) Date de publication de la demande: **01.06.1994**
(21) Numéro de dépôt: 93402801.0
(22) Date de dépôt: 18.11.1993
(51) Int. Cl.: H04Q 1/14

(54) **Système de communication avec réglette à contacts pour communications à grand débit**

(30) Priorité: 20.11.1992 FR 9213937
(71) Demandeur: Nozick, Jacques E., F-75005 Paris (FR)
(72) Inventeur: Nozick, Jacques E., F-75005 Paris (FR)
(74) Mandataire: Pinguet, André

(57) **Abrégé**

Système de connexion comportant une réglette à contacts (1) en matière plastique isolant et un rail métallique (2) relié à la terre, ladite réglette à contacts comportant deux côtés (4) de forme générale plane sensiblement rectangulaire et perpendiculaire à la direction longitudinale du rail (2), deux faces latérales (5, 6), une face avant (7) dotée de contacts électriques (3) et une face arrière (8) fixée au rail, chacun des côtés (4) ayant une surface extérieure,
caractérisé en ce que les surfaces extérieures desdits côtés (4) de la réglette sont formées avec une couche électriquement conductrice qui est en contact électrique avec le rail (2).

## Description

La présente invention concerne un système de connexion avec réglette à contacts pour communications à grand débit.

En particulier, l'invention concerne un système de connexion ayant au moins une réglette à contacts du type tête de câble, que l'on trouve couramment dans les répartiteurs téléphoniques, bureautiques ou domestiques. Un telle réglette comporte au moins une rangée de contacts qui sont généralement connectés, d'une part aux conducteurs d'un câble, et d'autre part à des jarretières, comme il est bien connu. Le document EP-0 133 824 illustre par exemple de telles réglettes à contacts.

Les réglettes sont habituellement juxtaposées le long d'un rail métallique de fixation relié à la terre et disposées de telle façon que leurs faces latérales sont au contact ou au voisinage les unes des autres.

Tant que les débits d'information qui transitent par les réglettes à contacts ne sont pas trop élevés, par exemple, jusqu'à 16 Mbps (méga bit/seconde), cette disposition ne pose pas de problème particulier. Mais il apparaît des besoins de débits d'informations toujours croissants, et on estime que des débits de l'ordre de 155 Mbps seront atteints dans un avenir assez proche, dans les réseaux informatiques. Ces débits supposent des courants électriques variant à des fréquences élevées qui, en passant dans les conducteurs non blindés et dans les contacts d'une réglette à contacts, peuvent engendrer des ondes électromagnétiques susceptibles de perturber des appareils électriques ou électroniques voisins et notamment des réglettes à contacts voisines, particulièrement les réglettes à contacts fixées au même rail que la réglette pertubatrice, qui sont les plus proches.

Un premier problème technique consiste à empêcher la perturbation des réglettes voisines fixées au même rail, dont les côtés sont au voisinage de la réglette pertubatrice, et à limiter des ondes électromagnétiques émises dans les autres directions par ladite réglette perturbatrice.

La demande de brevet français FR-A-2 340 656 fait mention de l'utilisation d'un écran intercalé entre chaque élément modulaire. L'écran est raccordé à des masses électriques convenables et présente une forme géométrique semblable à celle des éléments.

La demande de brevet européen EP-A-0 489 642 divulgue une réglette à contact équipée de pattes d'encliquetage pour l'assujettissement de la réglette sur un rail. La réglette est pourvue de deux barrettes de masse qui courrent sur chaque flanc de la réglette et qui sont en contact électrique avec le rail au moyen de pattes et dont les extrémités sont ramenées sur une borne de masse et un contact de masse, respectivement. Les barrettes ne recouvrent qu'une infime partie des flancs de la réglette et sont par endroit apparentes ou incorporées dans la réglette.

Les solutions de l'art antérieur se montrent fort mal adaptées, soit qu'elles nécessitent l'utilisation d'un élément supplémentaire (écran intercalé), soit qu'elles n'isolent les réglettes que de manière imparfaire (barrettes de masse).

Selon l'invention, les problèmes susmentionnés sont résolus par un système de connexion comportant une réglette à contacts en matériau isolant et un rail métallique relié à la terre, ladite réglette à contacts comportant deux côtés de forme générale plane sensiblement rectangulaire et perpendiculaire à la direction longitudinale du rail, deux faces latérales, une face avant dotée de contacts électriques et une face arrière fixée au rail, chacun des côtés ayant une surface extérieure, caractérisé en ce que les surfaces extérieures desdits côtés de la réglette sont formées avec une couche électriquement conductrice qui est en contact électrique avec le rail. La réglette selon l'invention forme un tout avec l'écran. En effet, l'écran est incorporé dans la réglette de sorte que chaque réglette est ainsi isolée individuellement des autres adjacentes. Les couches conductrices formant les surfaces extérieures des côtés de la réglette constituent en sorte une cage de Faraday empêchant le rayonnement des ondes électromagnétiques hors de la réglette. L'incorporation des écrans et l'unicité de l'élément qui en découle, facilite le montage des réglettes sur le rail qui ne nécessitent pas de câbles pour le raccordement des "écrans" sur le rail. Le coût d'installation d'un dispositif utilisant de telles réglettes s'en trouve également diminué. Dans l'art antérieur, l'interposition d'un écran séparé entre chaque réglette crée une surépaisseur qui nécessite alors de prévoir des rails plus longs, d'où un encombrement accru. L'épaisseur de la couche conductrice se compte en µm ou moins et ne nuit donc pas à l'épaisseur de la réglette. Avantageusement, lesdits côtés de la réglette sont constitués chacun par un flasque en matériau isolant rapporté sur ladite réglette, et lesdits flasques sont revêtus d'un dépôt métallique qui constitue ladite couche électriquement conductrice. Avantageusement, lesdits flasques comportent chacun une patte élastique qui est en appui élastique contre le rail, ladite patte élastique étant elle-même revêtue du dépôt métallique pour réaliser le contact électrique entre le rail et ladite couche conductrice. Les flasques peuvent comporter des canaux intérieurs pour recevoir des conducteurs isolés et les guider vers lesdits contacts, lesdits canaux intérieurs étant eux-même revêtus du dépôt métallique en contact électrique avec le rail, ce qui limite les émissions électromagnétiques parallèlement aux côtés de la réglette. Avantageusement, les flasques sont amovibles. L'invention a aussi pour objet un tel flasque, pris en lui-même.

Un deuxième problème technique est d'empêcher qu'une réglette à contacts ne perturbe non seulement les réglettes fixées au même rail, mais aussi les réglettes fixées à d'autres rails voisins, les rails étant tous situés dans un même plan.

Selon l'invention, ce problème est résolu par un système de connexion tel que défini ci-dessus, dans lequel chaque face latérale de la réglette est dotée d'une lame métallique sensiblement parallèle à ladite face latérale, ladite lame métallique étant en contact électrique avec le rail. Avantageusement, ledit câble comportant en outre un drain d'écran, ladite lame métallique est au moins partiellement exposée à l'extérieur de la réglette, la réglette comporte en outre un doigt presseur qui est disposé sur chaque face latérale de la réglette à l'extérieur de la lame métallique, ledit doigt presseur ayant une face d'appui en appui élastique contre la lame métallique et une extrémité libre pour revevoir ledit drain d'écran et le connecter à la terre par coincement entre la lame métallique et le doigt presseur. Selon une forme de réalisation, ladite lame élastique est sollicitée élastiquement vers le doigt presseur par le rail. Avantageusement, la lame métallique a une largeur, et les flasques sont écartés d'une épaisseur, telles que ladite largeur soit comprise entre un tiers de ladite épaisseur et une fois ladite épaisseur.

Un troisième problème est d'empêcher ou de limiter les émissions d'ondes électromagnétiques par la face avant de la réglette.

Selon l'invention, ce problème est résolu en ce que ledit système de connexion comporte un connecteur fixé sur la face avant de la réglette et relié à la terre, ledit connecteur comporte des parties électriquement conductrices formant écran, qui sont connectées à la terre, et lesdites parties conductrices s'étendent sensiblement entre les couches électriquement conductrices de la réglette.

Selon une forme de réalisation, la face avant de la réglette comporte des contacts de terre en contact électrique avec le rail et lesdites parties conductrices formant écran du connecteur sont en contact électrique avec au moins un desdits contacts de terre. Avantageusement, lesdits contacts de terre sont reliés entre eux par une bande métallique qui s'étend sensiblement entre les deux faces latérales de la réglette, chaque face latérale comporte une lame métallique en contact avec le rail et chaque lame métallique est en contact avec ladite bande métallique. Selon une forme de réalisation, ledit connecteur comporte un support de conducteurs et de contacts en matériau isolant, une pièce de verrouillage fixée audit support, qui entoure ledit support et qui comporte des bras élastiques à crochets qui coopèrent avec la réglette pour fixer le connecteur, par encliquetage sur la réglette, et une pièce de déverrouillage mobile axialement par rapport à la pièce de verrouillage, qui entoure la pièce de verrouillage et qui coopère avec la pièce de verrouillage pour défaire l'encliquetage des bras élastiques à crochets sur la réglette lorsqu'on tire axialement sur ladite pièce de déverrouillage, et dans laquelle lesdites parties conductrices formant écran du connecteur sont constituées par au moins une des pièces parmi la pièce de verrouillage et la pièce de déverrouillage. De préférence, lesdites parties conductrices formant écran du connecteur sont moulées en matière plastique et recouvertes d'un dépôt métallique.

Avantageusement, le câble comporte un drain d'écran qui est lui-aussi connecté à la terre avec les parties conductrices formant écran du connecteur. En particulier, lorsque le connecteur comporte un support de conducteur et de contact, une pièce de verrouillage et une pièce de déverrouillage comme mentionné précédemment, avantageusement, ledit connecteur comporte un contact de terre connecté audit drain d'écran, et le connecteur comporte en outre une lame élastique métallique en appui élastique contre le contact de terre et en appui élastique glissant contre la pièce de verrouillage, ladite pièce de verrouillage étant électriquement conductrice et reliée à la terre, ladite pièce de verrouillage étant fixée au support de contacts et de conducteurs par emboîtement et encliquetage, et la réglette comporte un contact de terre complémentaire, en contact électrique avec le contact de terre du connecteur et avec le rail. Cette conception permet une mise à la terre très facile des drains d'écran des câbles connectés aux contacts de la réglette par des connecteurs reçus en face avant de la réglette, et elle pourrait éventuellement être employée dans ce seul but, sans les couches électriquement conductrices sur le côtés de la réglette.

D'autres caractéristiques et avantages apparaîtront au cours de la description suivante d'une forme de réalisation particulière de l'invention, donnée à titre d'exemple non limitatif, en regard des dessins joints.

Sur les dessins:
- la figure 1 est une vue en élévation d'une réglette à contacts de l'art antérieur,
- la figure 2 est une vue en perspective d'une réglette à contacts selon l'invention,
- les figures 3 et 4 sont des vues en élévation de deux pièces constitutives de la réglette à contacts selon l'invention,
- la figure 5 est une vue en perspective d'une réglette à contacts selon l'invention, sans les flasques latéraux,
- la figure 6 est une vue en élévation du peigne de terre de la réglette de la figure 2,
- la figure 7 est une vue en coupe selon la ligne VII-VII de la figure 6,
- la figure 8 est une vue en coupe partielle de la réglette de la figure 2,
- les figures 9 et 10 sont des vues respectivement de côté et de face de la lame latérale de contact de terre de la réglette de la figure 2,
- la figure 11 est une vue en coupe partielle de la réglette de la figure 2, montrant la lame de contact de terre des figures 9 et 10,
- la figure 12 est une vue en perspective de la partie supérieure de la réglette de la figure 2,
- la figure 13 est une vue en perspective de la réglette de la figure 2, dans laquelle la pièce centrale supérieure et les flasques latéraux ont été enlevés,
- la figure 14 est une vue en coupe transversale partielle de la réglette de la figure 2,
- la figure 15 est une vue de la face avant de la réglette de la figure 2,
- la figure 16 est une vue en perspective de la face avant de la réglette de la figure 2, avec un connecteur branché dessus,
- la figure 17 est une vue en élévation d'un flasque latéral de la réglette de la figure 2,
- la figure 18 est une vue en élévation de la pièce de déverrouillage d'un connecteur pouvant être branché sur la face avant de la réglette de la figure 2,
- la figure 19 est une vue en coupe selon la ligne XIX-XIX de la figure 18,
- la figure 20 est en vue en coupe selon la ligne XX-XX de la figure 19,
- la figure 21 est une vue en coupe selon la ligne XXI-XXI de la figure 20,
- la figure 22 est une vue en élévation d'une pièce de verrouillage qui collabore avec la pièce de la figure 18,
- la figure 23 est une vue en coupe selon la ligne XXIII-XXIII de la figure 22,
- la figure 24 est une vue en coupe selon la ligne XXIV-XXIV de la figure 23,
- la figure 25 est une vue en élévation d'un support de contact contenu dans la pièce de verrouillage de la figure 22,
- la figure 26 est une vue de dessous de la pièce de la figure 25, selon la direction XXVI,
- la figure 27 est une vue en coupe selon la direction XXVII-XXVII de la figure 25,
- la figure 28 est une vue en élévation d'un support de conducteurs contenu dans la pièce de verrouillage de la figure 22,
- la figure 29 est une vue de dessus du support de conducteurs de la figure 28,
- la figure 30 est une vue en coupe selon la ligne XXX-XXX de la figure 28,
- la figure 31 est une vue en coupe selon la ligne XXXI-XXXI de la figure 28,
- la figure 32 est une vue en coupe partielle d'un connecteur comportant les pièces des figures 18 à 31,
- les figures 33 et 34 sont des vues de détail en coupe du connecteur de la figure 32, et
- les figures 35 et 36 sont des vues en élévation des contacts du connecteur de la figure 32.

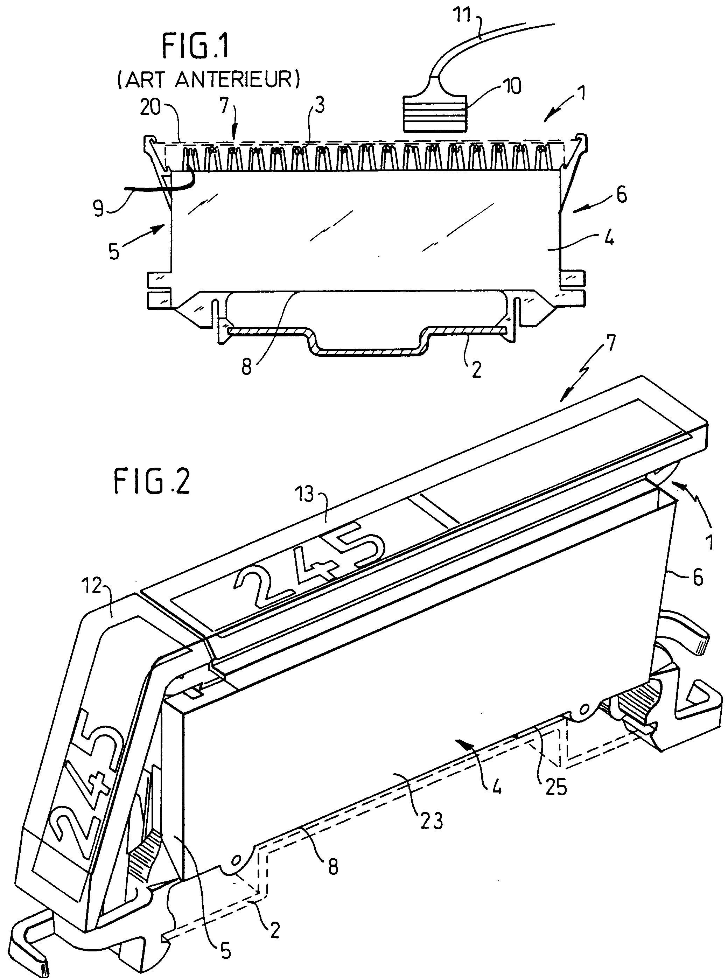

La figure 1 représente une réglette à contacts de type connu, généralement réalisée en matière plastique moulée. La réglette présente deux côtés 4 de forme générale rectangulaire plane, deux faces latérales 5, 6, une face avant 7 et une face arrière 8. La réglette 1 est encliquetée par sa face arrière 8 sur un rail 2 généralement métallique, et elle comporte sur sa face avant, une ou plusieurs rangées de contacts 3, qui sont généralement des contacts de type auto-dénudant, bien connus dans l'état de la technique. Les contacts auto-dénudants 3 sont connectés aux conducteurs d'un câble (non représenté) qui peut être un câble téléphonique, ou un câble de liaison informatique ou autre. Les côtés 4 de la réglette 1 peuvent avantageusement être consitués pas des flasques dotés de canaux de guidage intérieurs pour guider les différents conducteurs du câble. Par ailleurs, les contats auto-dénudants 3 sont connectés à des jarretières, c'est-à-dire à des conducteurs qui permettent de réaliser un brassage au sein d'un répartiteur téléphonique, informatique ou autre. Les jarretières peuvent être des conducteurs 9, qui sont engagés individuellement dans les fentes des contacts auto-dénudants 3, mais les jarretières peuvent aussi être constituées par des câbles 11 terminés par une prise 10 qui s'enfiche sur les contacts auto-dénudants 3.

Dans un répartiteur téléphonique ou informatique, un grand nombre de réglettes 1 sont encliquetées les unes à côté des autres sur un ou plusieurs rails 2.

La figure 2 représente un réglette à contacts 1 selon la présente invention, qui a une forme générale similaire à celle de la figure 1, et qui ne sera pas décrite à nouveau en détail ici. Les références employées pour la figure 1 seront reprises pour la figure 2 et les figures suivantes, pour désigner des éléments identique ou similaires à ceux de la figure 1.

Comme on le voit sur la figure 2, la réglette 1 selon l'invention peut être dotée de différents porte-étiquettes, par exemple, un porte-étiquette frontal 13, qui peut être réalisé en matière plastique transparente et qui est avantageusement monté rotatif près d'une face latérale de la réglette, et/ou un porte-étiquette latéral 12, qui peut être lui-aussi en matière plastique transparente et qui peut éventuellement être rotatif.

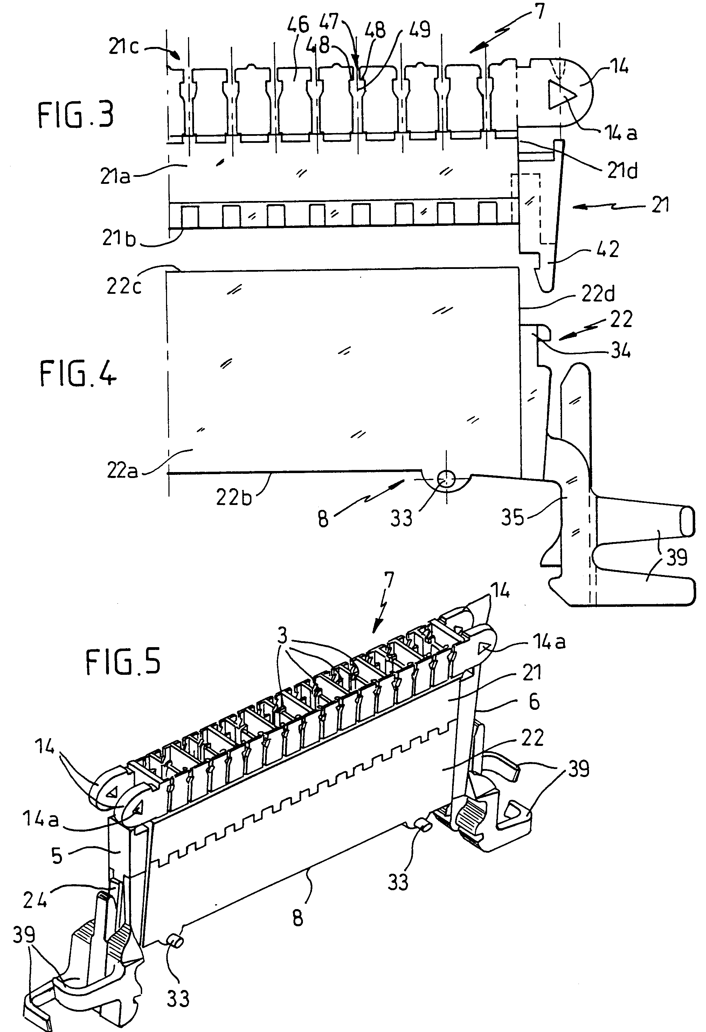

La réglette à contact 1 compore un pièce centrale inférieure 22 et une pièce centrale supérieure 21. La pièce inférieure 22 est bien visible en particulier sur les figures 4, 5, 11 et 13. Comme on peut le voir sur la figure 4, la pièce centrale inférieure 22 comporte deux côtés 22a de forme générale rectangulaire plane, qui sont délimités par un bord supérieur 22c, un bord inférieur 22b et deux bords latéraux 22d. Le bord inférieur 22b forme la face arrière 8 de la réglette. Chaque côté 22a comporte des ergots 23 dont l'utilité sera vue plus loin. En outre, chaque bord latéral 22d comporte des bossages d'encliquetage 34, dont l'utilité sera vue plus loin. Enfin, sur chaque bord latéral 22d, un jambage 35 s'étend vers le rail 2 sensiblement parallèlement audit bord latéral 22d. Chaque jambage 35 comporte deux doigts guide-fil 39 dirigés vers l'extérieur et deux bossages d'encliquetage 36, dirigés vers l'intérieur, et séparés par un espace libre vertical 38. Chaque bossage d'encliquetage 36 présente une fente horizontale 37 qui est parallèle au rail 2, et qui s'encliquète sur le rail 2 lorsque la réglette est fixée audit rail. En outre, chaque jambage 35 présente un doigt presseur 27, doté d'une face d'appui sensiblement plane 27a dirigée vers le bord latéral 22d de la pièce 22. Le doigt presseur s'étend en direction de la face avant 7 de le réglette, jusqu'à une extrémité libre 27b. En outre, comme on peut le voir sur la figure 1, le jambage 35 est relié au bord latéral 22d par deux parois de liaions 41 sensiblement parallèles aux côtés 22a de la pièce 22, de sorte qu'une espace libre 41 est laissé entre les deux parois de liaisons 40, au niveau de la face d'appui 27a du doigt presseur 27. La pièce centrale inférieure 22 est creuse et comporte une ouverture supérieure 44, interrompue par des plots 45.

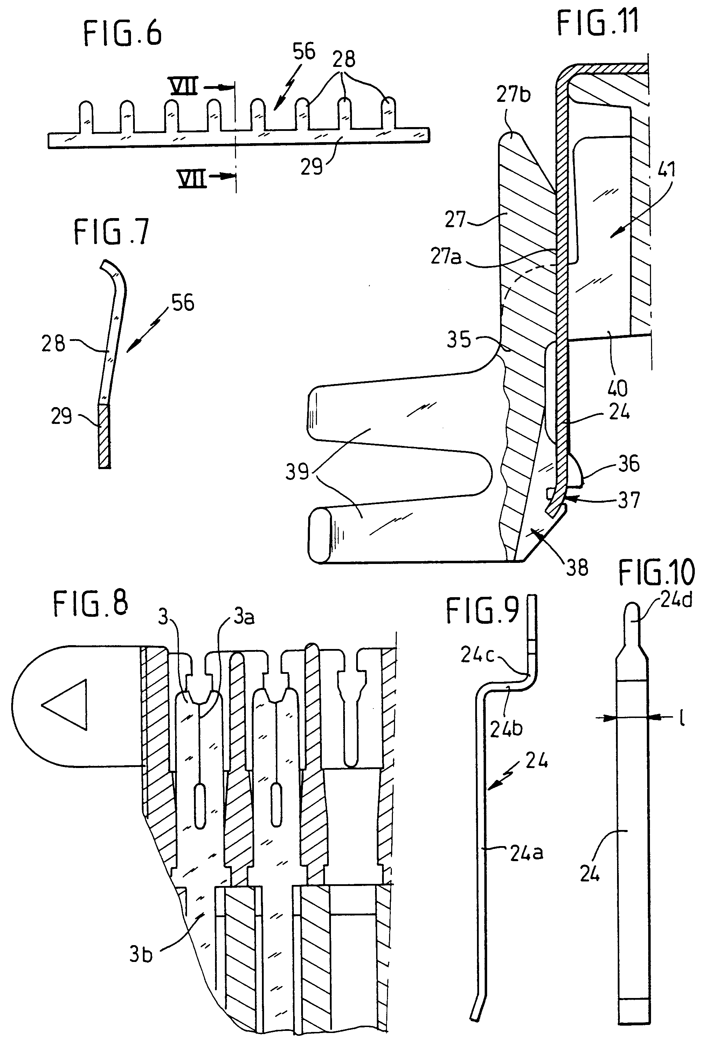

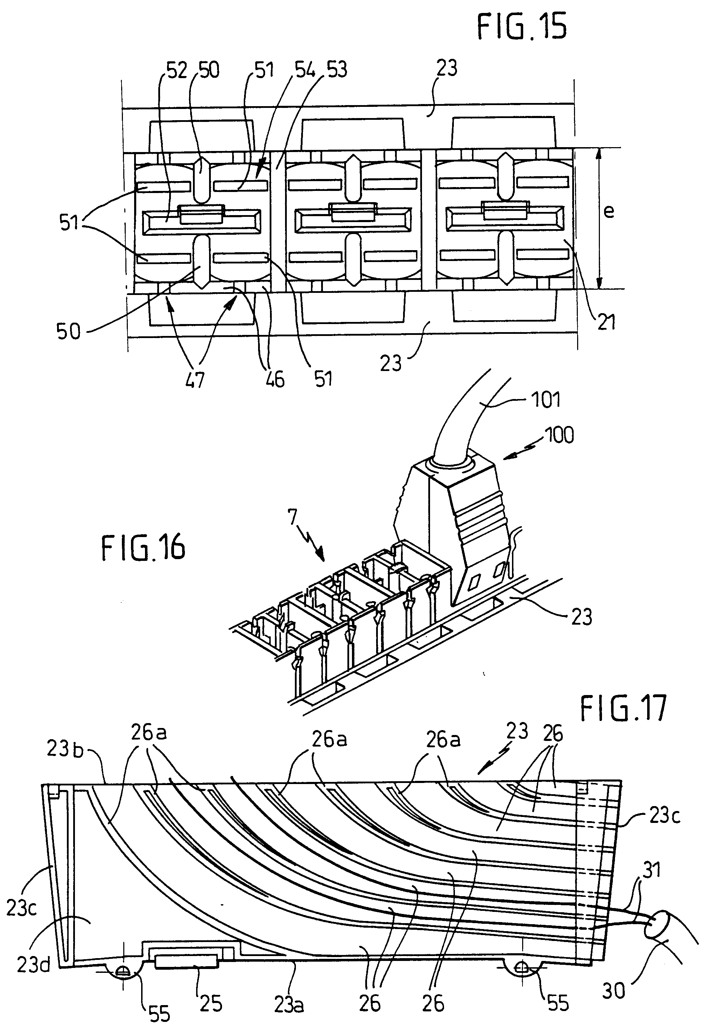

La pièce centrale supérieure 21 est bien visible sur les figures 3, 12 et 15. Comme on peut le voir sur la figure 3, la pièce centrale supérieure 21 comporte deux côtés 21a, un bord inférieur 21b, un bord supérieur 21c qui constitue la face avant 7 de la réglette, et deux bords latéraux 21d. Chaque bord latéral 21d comporte deux crochets d'encliquetage 42, qui s'étendent vers le bas et sont adaptés à s'encliqueter dans les bossages d'encliquetage 34 de la pièce centrale inférieure 2, lorsque les deux pièces sont assemblées comme représenté sur la figure 5. Chaque bord latéral 21d comporte en outre un bossage 14, ayant des orifices 14a permettant l'encliquetage de porte-étiquettes rotatitfs. Le bord inférieur 21b de la pièce centrale supérieure 21 comporte en outre un passage 43, qui s'étend sensiblement sur l'ensemble du bord inférieur 21b. Comme on peut le voir sur la figure 15, le bord supérieur 21c de la pièce centrale supérieure 21 comporte sur chaque côté 21a, une série de créneaux 46 parallèles à chaque côté 21a, qui sont séparés par des fentes 47 verticales. Chaque fente verticale 47 présente de chaque côté un épaulement 48 dirigé vers le bas. Comme on peut le voir sur la figure 15, dans chaque rangée de créneaux, un créneau sur deux est lié à une cloison 53, disposée verticalement et perpendiculairement au créneau, qui s'étend jusqu'à l'autre côté de la pièce centrale 21, tandis que les autres créneaux comportent une paroi verticale 50, qui s'étend sur une certaine distance en direction de l'autre côté de la pièce centrale 21. Les cloisons 53 délimitent ainsi des alvéoles 54, qui contiennent chacune, dans l'exemple représenté, quatre puits latéraux 51, et un puits central 52. Les puits latéraux 51 et le puits central 52 communiquent avec le passage 43 du bord inférieur 21b de la pièce centrale supérieure 21. Les puits latéraux 51 ont chacun une forme sensiblement rectangulaire et ils sont alignés en deux rangées proches chacune d'un coté latéral 21a de la pièce centrale 21. En outre, les puits latéraux 51 d'une des deux rangées sont disposés chacun en face d'un autre puits 51 de l'autre rangée. Dans l'exemple représenté, les puits centraux 52 ont eux-aussi une forme sensiblement rectangulaires, et sont alignés en une rangée disposée entre les deux rangées de puits latéraux 51. Chaque puits cental 52 s'étend sensiblement sur la longueur des deux puits latéraux 51 alignés de chaque rangée, qui sont contenus dans chaque alvéole 54.

Comme on peut le voir sur les figures 2 et 17, la réglette à contacts comporte en outre deux flasques latéraux 23, qui sont fixés sur chaque côté des pièces centrales 21 et 22. Chaque flasque latéral 23 a une forme générale sensiblement rectangulaire, avec un bord inférieur 23a, un bord supérieur 23b, et deux bords latéraux 23c. Chaque flasque 23 comporte un côté intérieur 23d, qui est disposé contre les pièces centrales 21 et 22 et qui comportent des canaux de guidage 26, délimités par des parois 26a perpendiculaires auxdits flasques 23. Les canaux de guidage 26 débouchent sur le bord supérieur 23b du flasque 23, ainsi que sur un de ses bords latéraux 23c. Les canaux de guidage 26 sont adaptés à recevoir des conducteurs isolés 32 d'un câble 30, et à les guider vers les contacts disposés sur la face avant 7 de la réglette. Chaque flasque 23 comporte en outre des alésages 55 adaptés à recevoir les ergots 33 de la pièce centrale inférieure 22, pour fixer les flasques latéraux sur la réglette. Chaque flasque latéral 23 comporte en outre une patte élastique 25 qui s'étend perpendiculairement au côté 4 de la réglette en-dessous de la pièce centrale inférieure 22, et qui appuie élastiquement contre le rail métallique 2 lorsque la réglette 1 est fixée audit rail. Chaque flasque est recouvert intégralement d'un dépôt métallique conducteur, de sorte que les flasques 23 sont en contact électrique avec la terre par l'intermédiaire du rail 2. On limite ainsi les émissions d'ondes électromagnétiques dans une direction perpendiculaire au côté 4 de la réglette par les conducteurs isolés 31. En outre, comme les conducteurs isolés 31 sont disposés dans des canaux 26 entre les parois 26a qui sont elles-mêmes recouvertes du dépôt métallique en contact électrique avec la terre, les émissions d'ondes électromagnétiques vers les faces latérales et vers la face avant de la réglette sont elles-aussi limitées.

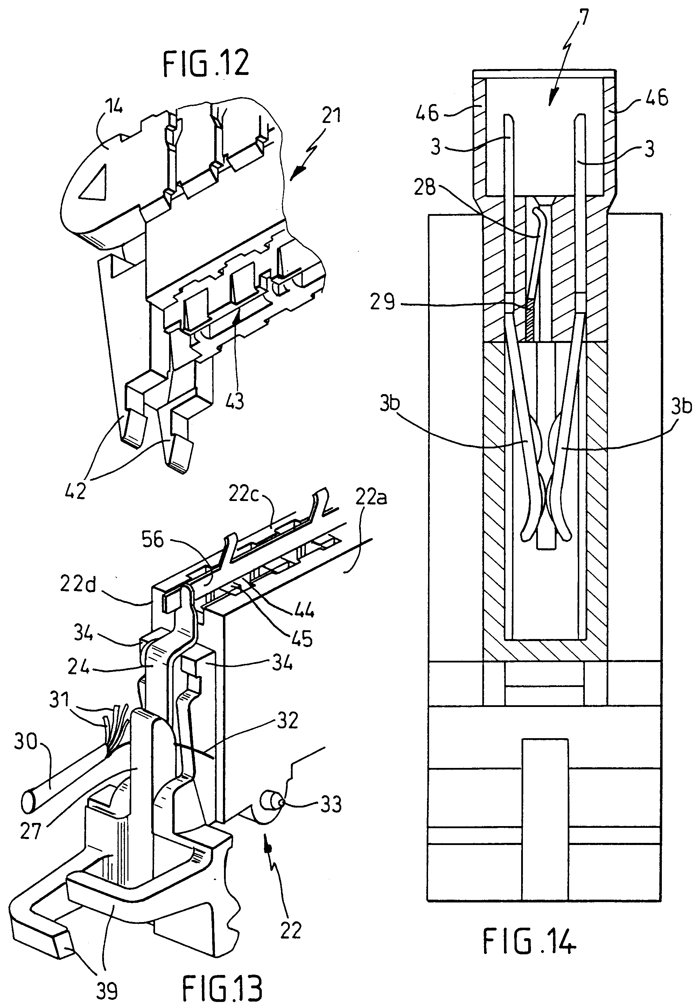

La réglette comporte en outre, sur chaque face latérale, une lame métallique en tôle découpée et pliée, 24 qui est reliée à la terre et qui est bien visible sur les figures 9, 10, 11 et 13. La lame métallique 24 peut par exemple avoir une largeur *l* égale au tiers environ de l'épaisseur libre *e* (figure 15) entre les flasques 23, ou une largeur supérieure pouvant aller jusqu'à ladite épaisseur *e.* La lame métallique 24 comporte une première partie rectiligne verticale 24a, qui se prolonge en partie supérieure par une partie rectiligne horizontale 24b, elle-même prolongée vers le haut, par une deuxième partie rectiligne verticale 24c. La deuxième partie rectiligne verticale 24c présente un rétrecissement supérieur 24d. La première partie rectiligne verticale 24a de la lame métallique 24 est disposée en appui élastique contre la face d'appui 27a du doigt presseur 27 (figure 11), et elle traverse l'espace libre 41 entre les deux parois de liaison 40 pour s'étendre jusque dans l'espace 38 situé entre les deux bossages d'encliquetage 36 du jambage 35 de la pièce centrale inférieure 22. Lorsque le rail 2 est encliqueté dans les fentes 37, des bossages d'encliquetage 36, ledit rail 2 appuie sur ladite première partie verticale 24a de la lame métallique en la déformant vers le jambage 35, en appuyant ainsi élastiquement ladite lame métallique 27 contre la face d'appui 27a du doigt presseur 27. La partie horizontale 24b de la lame métallique pénètre à l'intérieure de la réglette, entre les pièces centrales inférieure 22 et supérieure 21, et la deuxième partie verticale 24c de la lame métallique s'étend à l'intérieur du passage 43 de la pièce centrale supérieure 21. Comme on peut le voir sur la figure 13, cette disposition permet de connecter à la terre un drain d'écran 32 d'un câble 30, ayant des conducteurs 31 qui sont guidés dans les canaux 26 des flasques 23. Le drain d'écran 32 du câble 30 est un conducteur généralement non isolé et il est connecté à la terre simplement par coincement entre le doigt presseur 27 et la lame métallique 24, ladite lame métallique étant en contact avec le rail 2 relié à la terre. En outre, les lames métalliques 24, du fait qu'elles sont reliées à la terre, forment un écran qui limite grandement les émissions d'ondes électromagnétiques par les faces latérales 5 et 6 de la réglette.

Comme on peut le voir sur les figures 6, 7, 13 et 14, la réglette comporte en outre un peigne de terre 56 en tôle découpée et pliée, qui comporte une bande métallique 29, qui est logée dans le passage 43 de la pièce supérieure 21 de la réglette et s'étend sensiblement sur toute la longueur de ladite réglette, entre les faces latérales 5 et 6. Comme on peut le voir sur la figure 13, la bande 29 repose sur les blots 45 qui interrompent l'ouverture supérieure 44 de la pièce centrale inférieure 22. En outre, à chaque extrémité, la bande métallique 29 est en contact avec la partie rétrécie 24d de la lame métallique 24. Comme on peut le voir sur les figures 6 et 7, le peigne de la terre 56 comporte en outre des doigts élastiques de contact 28, qui s'étendent chacun au milieu d'un puits central 52 déjà décrit.

Comme on peut le voir sur les figures 8 et 14, les puits latéraux 51 de la réglette sont occupés chacun par un contact auto-dénudant 3, qui comporte classiquement une fente 3a ouverte vers le haut dans laquelle on peut enfoncer un conducteur isolé, ce qui coupe l'isolant et établit le contact électrique entre le contact auto-dénudant 3 et le conducteur. En outre, chaque contact auto-dénudant comporte un prolongement 3b dirigé vers le bas, les prolongements 3b des deux contacts auto-dénudants 3 qui se font face étant en contact élastique l'un contre l'autre. Il est possible d'interrompre le contact entre les prolongements 3b des deux contacts 3 se faisant face, en insérant une plaque isolante (non répresentée) dans le puits cental 52 qui est disposé entre les deux contacts 3 se faisant face. Il faut noter toutefois que l'invention n'est pas limitée à une réglette à contacts ayant des contacts auto-dénudants 23 à une seule fente, et que l'invention n'est pas non plus limitée à une réglette ayant des contacts auto-dénudants se faisant face et/ou ayant des prolongements 3b qui sont en contact élastique l'un contre l'autre. L'invention s'applique aussi bien à des réglettes à contact ayant une ou plusieurs rangées de contacts auto-dénudants sur sa face avant quelle que soit la configuration de ces contacts.

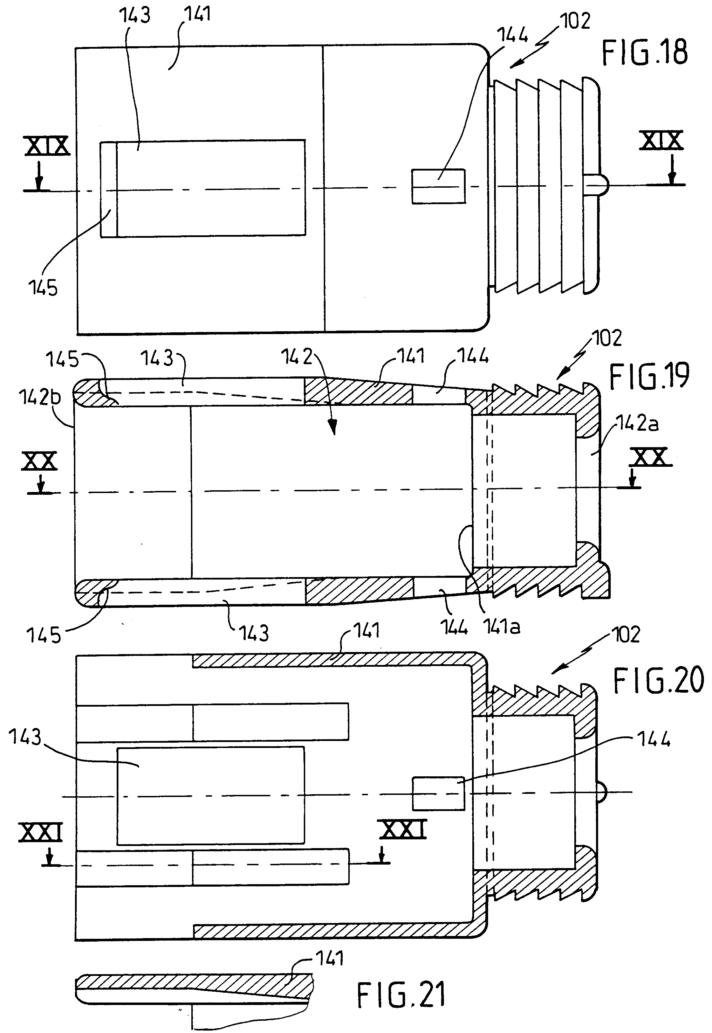

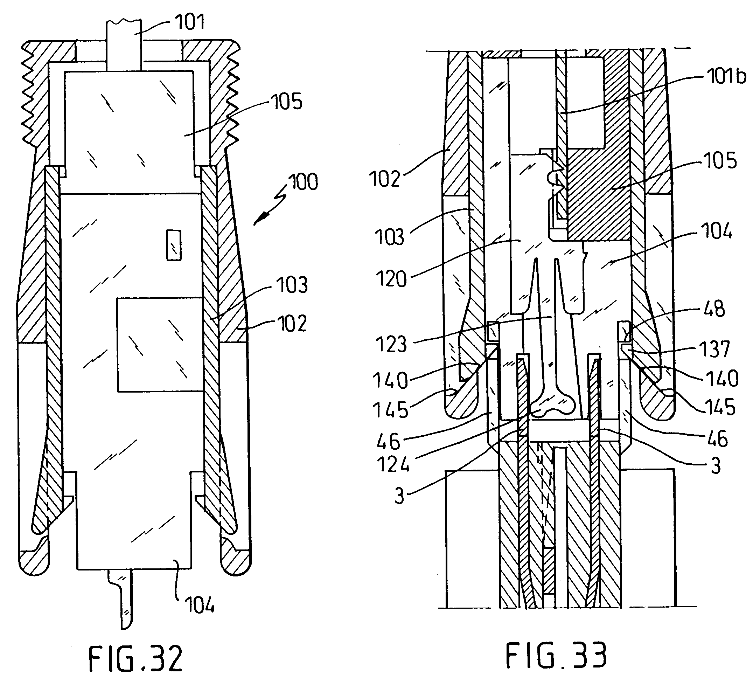

En plus des conducteurs 31 guidés dans les canaux 26 des flasques 23, les contacts 3 peuvent être connectés à un conducteur 100 relié à un câble 101, comme représenté sur la figure 16. Le connecteur 100 de la figure 16 est connecté seulement aux autres contacts d'une alvéole 54, mais le connecteur100 peut aussi être connecté au huit contacts de deux alvéoles contigües. Les figures 18 à 36 décrivent un tel connecteur 100, destiné à occuper deux alvéoles contigües. Avantageusement, le connecteur 100 est de type "push-pull", c'est-à-dire adapté à s'encliqueter sur la réglette 1 lorsqu'on le branche, et qui nécessite de tirer sur une pièce de déverrouillage lorsqu'on le débranche. Comme on peut le voir sur la figure 32, le connecteur 100 comporte un support de contact 104, un support de conducteur 105 fixé audit support de contact 104, une pièce de verrouillage 103 fixée aux supports de contact et de conducteur 104 et 105, et qui entoure lesdits supports de contact et de conducteur, et une pièce de déverouillage 102 qui est montée coulissante par rapport à la pièce de la verrouillage 103 et qui entoure ladite pièce de verrouillage 103. Les pièces 102, 103, 104, et 105 sont généralemznt moulées en matière plastique, mais les pièces 102 et 103 sont recouvertes d'un dépôt métallique conducteur.

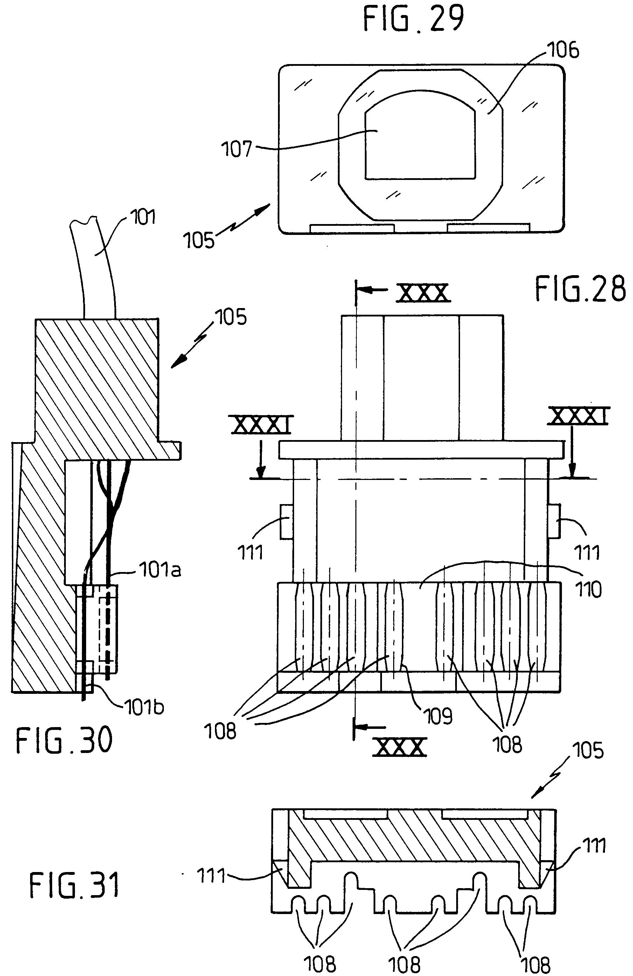

Le support de conducteur 105 est représenté sur les figures 28 à 31. Comme représenté sur la figure 29, le support de conducteur 105 comporte en partie supérieure un conduit 106 qui délimite un canal 107 de passage du câble 101. Le support de conducteur 105 comporte en outre en partie inférieure plusieurs canaux 108 récepteurs de conducteurs, au nombre de huit dans l'exemple réprésenté. Les canaux 108 sont ouverts latéralement comme on peut le voir sur la figure 31, et ils reçoivent chacun un conducteur isolé provenant du câble 101, ledit conducteur isolé pouvant être un conducteur 101b de transport d'informations, ou bien un drain d'écran 101a. Dans l'exemple particulier représenté sur les dessins, les conducteurs isolés sont au nombre de huit, avec six conducteurs de transport d'informations 101b et deux conducteurs de drain d'écran 101a. Chacun des canaux 108 de réception de conducteur présente un rétrécissement inférieur 109 et un rétrécissement supérieur 110, de façon à coincer les conducteurs 101a et 101b. En outre, comme représenté sur les figures 28 et 31, le support de conducteur 105 comporte deux crochets d'encliquetage latéraux 111 dont l'utilité sera vue plus loin.

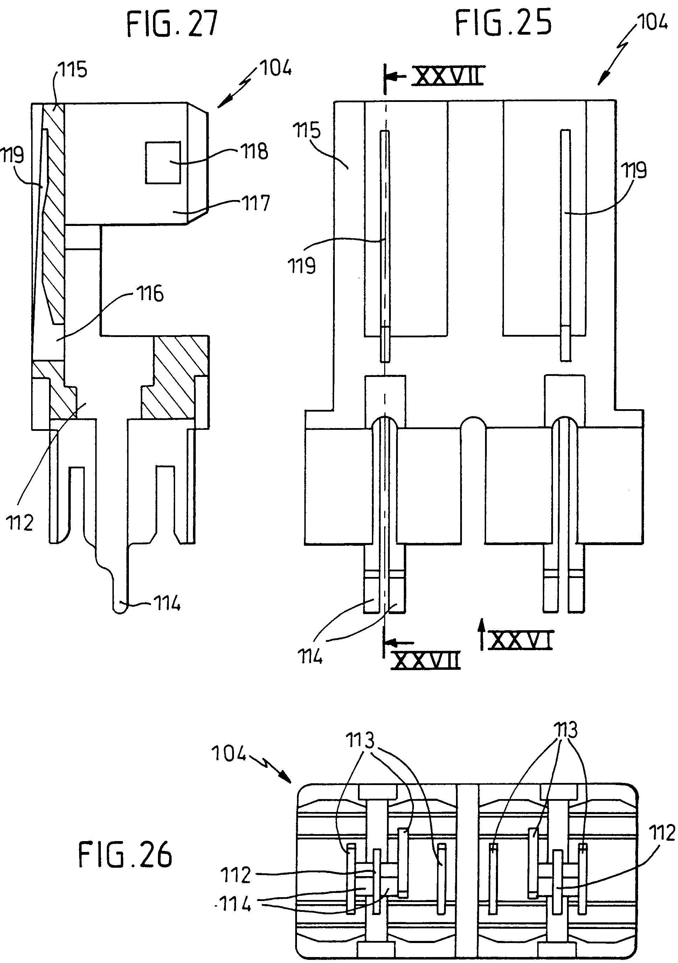

Le connecteur 100 comporte en outre un support de contact 104, représentée en particulier sur les figures 25 à 27. Le support de contact 104 comporte huit logements destinés à recevoir des contacts, dont deux logements 112 de contact de terre, et six logements 113 de contact de transport d'informations. Chaque contact de terre est encadré par deux doigts raidisseurs saillants 114, bien visibles sur les figures 25 et 27. Le support de contact 104 comporte en outre une paroi latérale 115. A partir de la paroi latérale s'étendent deux parois de fixation 117 qui sont perpendiculaires à ladite paroi latérale 115, chaque paroi de fixation 117 présentant un orifice 118, qui reçoit un crochet 111 lors de l'assemblage des pièces 104 et 105. En outre, la paroi latérale 115 présente deux rainures verticales externes 119, et chaque rainure 119 communique à son extrémité inférieure avec un logement de contact de terre 112, par l'intermédiaire d'un orifice 116.

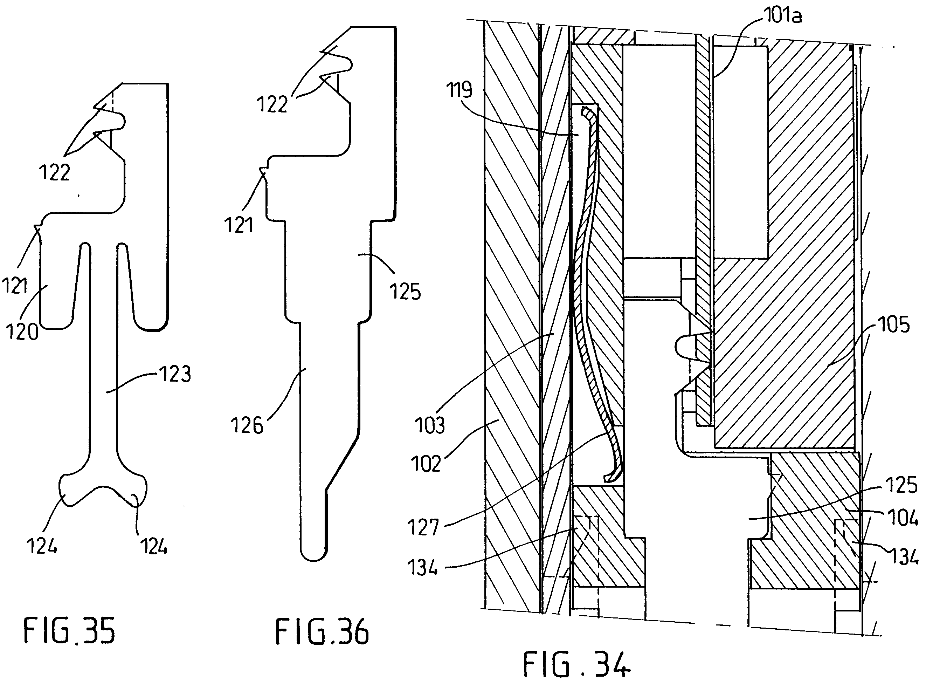

Le support de contact 104 supporte tout d'abord des contacts de transports d'informations 120, dont un exemple est représenté sur les figures 33 et 35. Chaque contact de transport d'informations 120 est une pièce de tôle découpée qui présente un cran 121 qui s'enfiche dans la matière plastique du support 104 pour fixer le contact 120 dans son logement 113, et deux pointes 122 qui pénètrent dans un canal de réception de conducteurs 108, lorsque le support de conducteur 105 est fixé au support de contact 104, lesdites pointes 122 déchirant alors l'isolant qui entoure le conducteur contenu dans le canal 108, de façon à établir le contact électrique entre le conducteur 101b en question et le contact de transport d'informations 120. Le contact 120 comporte en outre une tige relativement mince 123 qui s'étend vers le bas, c'est-à-dire en direction de la face avant 7 de la réglette lorsque le connecteur 100 est branché sur la réglette, et ladite tige 123 se termine, dans l'exemple représenté, par deux appendices latéraux 124. Lorsque le connecteur 100 est branché sur la réglette 1, comme représenté sur la figure 33, l'un des appendices 124 de la tige 123 s'appuie élastiquement contre un contact auto-dénudant 3, en déformant légèrement la tige 123. Parmi les six contacts 120 de transport d'informations, quatre contacts 120 sont connectés aux quatre contacts auto-dénudants d'une rangée parmi les deux alvéoles recouvertes par le connecteur 100, et deux contacts 120 sont connectés à deux contacts auto-dénudants 3 de l'autre rangée (généralement dans un but de repérage des contacts).

Un exemple d'un des contacts de terre 125 fixé dans la support de contact 104 est représenté sur la figure 36. Le contact de terre 125 comporte, comme le contact de transport d'informations 120, un cran 121 destiné à fixer le contact 125 dans le support 124, et deux pointes 122 destinées à établir la connection électrique avec un drain d'écran 101a du câble 101. Le contact de terre 125 comporte en outre un doigt 126, qui s'étend vers le bas, c'est-à-dire en direction de la réglette 1, lorsque le connecteur 10 est branché sur ladite réglette. Lorsque le connecteur 100 est branché sur la réglette, l'extrémité du doigt 126 pénètre dans un puits central 52 de la réglette, et vient en contact avec le doigt élastique 28 du peigne de terre, qui se trouve dans ledit puits 52. Le doigt 126 saille vers l'avant du connecteur et le doigts raidisseurs 114 du support de contact sert à éviter que le doigt 126 ne soit déformé par des chocs. Toutefois, le doigt 126 est légèrement saillant par rapport au doigt raidisseurs 114, de sorte que le contact électrique entre le doigt 126 et les doigts élastiques 28 du peigne de terre reste possible.

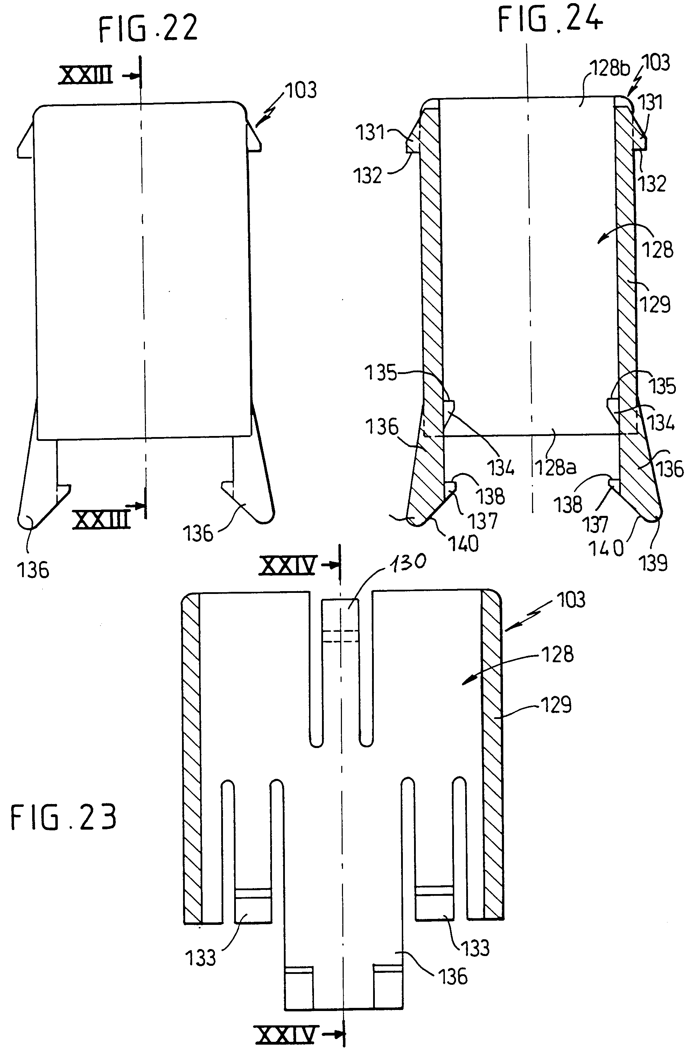

Le connecteur 100 comporte en outre une pièce de verrouillage 103, qui est représentée sur les figures 22 à 24. La pièce de verrouillage 103 est creuse, et elle forme un conduit central 128 délimité par une paroi latérale 129 à section rectangulaire. Le conduit central 128 s'étend axialement entre une extrémité inférieure ouverte 128a, et une extremité supérieure ouverte 128b. Le conduit 128 reçoit le support de contact 104 et le support de conducteur 105 après que lesdites pièces 104 et 105 ont été assemblées. La paroi latérale 129 comporte des découpes axiales qui délimitent, sur deux côtés opposés de la paroi 129, deux doigts élastiques 130 dirigés vers le haut et dotés chacun d'un crochet d'encliquetage 131 dirigé vers l'extérieur, ledit cochet ayant une surface d'épaulement 132 dirigée vers le bas. Les découpes axiales de la paroi latérale 129 délimite en outre quatre doigts élastiques 133, dirigés vers le bas, et répartis par paire sur deux côtés opposés de la paroi latérale 129, lesdits doigts élastiques 133 ayant chacun un crochet 134 dirigé vers l'intérieur, ledit crochet 134 ayant un épaulement 135 dirigé vers le haut. En outre, les découpes axiales de la paroi latérale 129 délimitent deux doigts élastiques 136, qui saillent axialement vers le bas, et qui sont disposés sur deux côtés opposés de la paroi latérale 129. Chaque doigt élastique 136 comporte deux crochets dirigés vers l'intérieur, chaque crochet 137 ayant une surface d'épaulement dirigée vers le haut. En outre, lesdits doigts élastiques 136 s'écartent vers l'extérieur à leur extrémité libre 139, et chaque extrémité libre 139 comporte une surface de came 140, qui est dirigée en biais vers le haut et vers l'intérieur de la pièce de verrouillage 103.

Comme on peut le voir sur la figure 34, les supports 104 et 105, après leur assemblage, sont insérés à l'intérieur de la pièce de verrouillage 103, et sont fixés dans ladite pièce de verrouillage 103 par les crochets 134 de ladite pièce de verrouillage. Avant l'insertion des supports 104 et 105 à l'intérieur de la pièce de verrouillage 103, une lame élastique 127 métallique est disposée dans chaque fente axiale 119 du support de contact 104, ladite lame élastique 127 étant comprimée par la paroi latérale de la pièce de verrouillage103 lors de l'insertion des supports 104 et 105 dans la pièce de verrouillage 103, et ladite lame élastique 127 étant alors en appui élastique contre le contact de terre 125 correspondant à la fente axiale 119 en question, et ladite lame élastique 125 étant en appui élastique glissant contre la paroi latérale de la pièce de verrouillage 103. Comme la pièce de verrouillage est revêtue d'un dépôt métallique, ladite pièce de verrouillage 103 constitue ainsi un écran relié à la terre par l'intermédiaire de la lame métallique élastique 127 du contact de terre 125, du peigne de terre, des lames métalliques 24, et du rail 2. La pièce de verrouillage 103 évite ainsi la propagation d'ondes électromagnétiques par la face avant 7 de la réglette, au niveau des deux alvéoles 54 occupées par le connecteur 100. Cette supression des émissions électromagnétiques par la face avant de la réglette est particulièrement efficace si l'ensemble de la face avant de la réglette est occupée par des connecteurs 100.

Le connecteur 100 comporte en outre une pièce de déverrouillage 102 qui est représentée sur les figures 18 à 21. La pièce de déverrouillage comporte une paroi latérale 141, qui délimite un conduit 142 qui s'étend axialement entre une extrémité arrière 142a et une extrémité avant 142b. La paroi latérale 141 a une section sensiblement rectangulaire, et comporte deux ouvertures 143 disposées sur deux côtés opposés, ainsi que deux ouvertures 144 disposées sur deux côtés opposés. En outre, la paroi latérale 141 comporte un épaulement intérieur 141a, dirigé vers le bas. Le conduit 142 reçoit la pièce de verrouillage 103, qui est montée coulissante à mouvement perdu à l'intérieur de la pièce de déverrouillage 104. Les crochets 131 de la pièce de verrouillage 103 sont encliquetés dans les ouvertures 144 de la pièce de déverrouillage 102, et le mouvement de coulissement de la pièce de verrouillage 103 à l'intérieur de la pièce de déverrouillage 102 est limité d'une part par les épaulements 132 desdits crochets 131, et d'autre part par l'épaulement 141a de la pièce de déverrouillage 102 contre laquelle bute la pièce de verrouillage 103. Les ouvertures 143 de la pièce de déverrouillage 102 recoivent les doigts élastiques 136, qui pénètrent dans lesdites ouvertures 143 au niveau de leur extrémité libre 139. Les ouvertures 143 comportent un bord inférieur 145 formé en biais vers l'extérieur et vers le bas, et dont l'utilité sera vue plus loin. Le montage de connecteur 100 est réalisé comme suit : on emboîte d'abord la pièce de verrouillage 103 à l'intérieur de la pièce de déverrouillage 102, on enfile les deux pièces 102 et 103 sur le câble 101, on fixe les conducteurs 101a et 101b du câble 101 sur le support de connecteur 105, on assenble le support de conducteur 105 sur le support de contact 104 doté de ses contacts, on met en place les lames élastiques 127 sur le support de contact 104, puis on emboîte l'ensemble formé par les supports 104 et 105 à l'intérieur de la pièce de verrouillage 103. Lors de ce dernier emboîtement, les doigts élastiques 133 de la pièce de verrouillage 103 sont écartés élastiquement vers l'extérieur : pour permettre cet écartement, la paroi latérale 141 de la pièce de déverrouillage 102 comporte des évidements 146 au niveau des doigts élastiques 133 de la pièce de verrouillage 103.

Comme on peut le voir sur la figure 33, lorsque le connecteur 100 est branché sur la réglette 1, les crochets 137 de la pièce de verrouillage 103 s'encliquète sous les épaulements 48 des créneaux 46. Pour débrancher le connecteur 100, il faut tirer axialement sur la pièce de déverrouillage 102, de sorte que le bord inférieur 145 de chaque ouverture 143 sollicite les bras élastiques 136 vers l'extérieur par l'intermédiaire de la surface de câble 140 desdits bras élastiques. Les crochets 137 sont ainsi dégagés des épaulements 48, de sorte que le connecteur 100 peut être débrancher de la réglette.

La pièce de déverrouillage 102 est métallique, et reliée à la terre par l'intermédiaire de la pièce de verrouillage 103. Les pièces 102 et 103 s'étendent sensiblement d'un flasque latéral 23 à l'autre, de sorte qu'elles constituent un bon écran contre l'émission d'ondes électromagnétiques vers l'avant de la réglette.

## Revendications

**1.-** Système de connexion comportant une réglette à contacts (1) en matériau isolant et un rail métallique (2) relié à la terre, ladite réglette à contacts comportant deux côtés (4) de forme générale plane sensiblement rectangulaire et perpendiculaire à la direction longitudinale du rail (2), deux faces latérales (5, 6), une face avant (7) dotée de contacts électriques (3) et une face arrière (8) fixée au rail, chacun des côtés (4) ayant une surface extérieure, caractérisé en ce que les surfaces extérieures desdits côtés (4) de la réglette sont formés avec une couche électriquement conductrice qui est en contact électrique avec le rail (2).

**2.-** Système de connexion selon la revendication 1, dans lequel lesdits côtés (4) de la réglette sont constitués chacun par un flasque (23) en matériau isolant rapporté sur ladite réglette, et lesdits flasques sont revêtus d'un dépôt métallique qui constitue ladite couche électriquement conductrice.

**3.-** Système de connexion selon la revendication 2, dans lequel lesdits flasques (23) comportent chacun une patte élastique (25) qui est en appui élastique contre le rail (2), ladite patte élastique étant elle-même revêtue du dépôt métallique pour réaliser le contact électrique entre le rail (2) et ladite couche conductrice.

**4.-** Système de connexion selon la revendication 2 ou la revendication 3 adapté à recevoir des conducteurs isolés (31) connectés auxdits contacts, dans lequel lesdits flasques (23) comportent des canaux intérieurs (26) pour recevoir lesdits conducteurs isolés et les guider vers lesdits contacts (3), lesdits canaux intérieurs étant en eux-même revêtus du dépôt métallique en contact électrique avec le rail.

**5.-** Système de connexion selon l'une quelconque des revendications précédentes, dans lequel chaque face latérale (5, 6) de la réglette est dotée d'une lame métallique (24) sensiblement parallèle à ladite face latérale, ladite lame métallique (24) étant en contact avec le rail (2).

**6.-** Système de connexion selon la revendication 5, adapté à recevoir un câble (30) contenant des conducteurs (31) connectés aux contacts, ledit câble comportant en outre un drain d'écran (32), dans lequel ladite lame métallique (24) est au moins partiellement exposée à l'extérieur de la réglette, la réglette comporte en outre un doigt presseur (27) qui est disposé sur chaque face latérale (4, 5) de la réglette à l'extérieur de la lame métallique (24), ledit doigt presseur (27) ayant une face d'appui (27a) en appui élastique contre la lame métallique (24) et une extrémité libre (27b) pour revevoir ledit drain d'écran et le connecter à la terre par coincement entre la lame métallique (24) et le doigt presseur (27).

**7.-** Système de connexion selon la revendication 6, dans lequel ladite lame élastique est sollicitée élastiquement vers le doigt presseur (27) par le rail (2).

**8.-** Système de connexion selon l'une quelconque des revendications précédentes, comportant au moins un connecteur (100) fixé sur la face avant (7) de la réglette et relié à un câble (101), ledit connecteur (100) étant connecté à des contacts (3) de la réglette, dans lequel ledit connecteur comporte des parties (102, 103) électriquement conductrices formant écran, qui sont connectées à la terre, et lesdites parties conductrices (102, 103) s'étendent sensiblement entre les couches électriquement conductrices de la réglette.

**9.-** Système de connexion selon la revendication 8, dans lequel la face avant (7) de la réglette comporte des contacts de terre (28) en contact électrique avec le rail (2) et lesdites parties conductrices formant écran (102, 103) du connecteur (100) sont en contact électrique avec au moins un desdits contacts de terre.

**10.-** Système de connexion selon la revendication 9, dans lequel lesdits contacts de terre sont reliés entre eux par une bande métallique (29) qui s'étend sensiblement entre les deux faces latérales (5, 6) de la réglette, chaque face latérale comporte une lame métallique en contact avec le rail (2) et chaque lame métallique est en contact avec ladite bande métallique (29).

**11.-** Système de connexion selon l'une quelconque des revendications 8 à 10, dans lequel ledit connecteur (100) comporte un support de conducteurs et de contacts (104, 105) en matériau isolant, une pièce de verrouillage (103) fixée audit support qui entoure ledit support et qui comporte des bras élastiques à crochets qui coopèrent avec la réglette (1) pour fixer le connecteur (100), par encliquetage sur la réglette, et une pièce de déverrouillage (102) mobile axialement par rapport à la pièce de verrouillage (103) qui entoure la pièce de verrouillage et qui coopère avec la pièce de verrouillage pour défaire l'encliquetage des bras élastiques à crochets sur la réglette lorsqu'on tire axialement sur ladite pièce de déverrouillage, et dans laquelle lesdites parties conductrices formant écran du connecteur sont constituées par au moins une des pièces parmi la pièce de verrouillage (103) et la pièce de déverrouillage (102).

**12.-** Système de connexion selon la revendication 11, dans lequel lesdites parties conductrices formant écran (102, 103) du connecteur sont moulées en matière plastique et recouvertes d'un dépôt métallique.

**13.-** Système de connexion selon l'une quelconque des revendications 8 à 12, dans lequel le câble (101) comporte un drain d'écran (101a) qui est lui-aussi connecté à la terre avec les parties conductrices formant écran du connecteur.

**14.-** Système de connexion selon la revendication 11 ou la revendication 12, dans lequel ledit connecteur (100) comporte un contact de terre (125) connecté audit drain d'écran (101a), et le connecteur comporte en outre une lame élastique métallique (127) en appui élastique contre le contact de terre (125) et en appui élastique glissant contre la pièce de verrouillage (103), ladite pièce de verrouillage étant électriquement conductrice et reliée à la terre, ladite pièce de verrouillage étant fixée au support de contacts et de conducteurs (104, 105) par emboîtement et encliquetage; et la réglette comporte un contact de terre complémentaire (28), en contact électrique avec le contact de terre du connecteur et avec le rail (2).

**15.-** Connecteur (100) pour un système selon une quelconque des revendications 11 à 14.

**16.-** Système de connexion selon une quelconque des revendications 2 à 4, dans lequel les flasques (23) sont amovibles.

**17.-** Flasque (23) pour un système selon la revendication 16.

**18.-** Système selon une quelconque des revendications 5 à 7, dans lequel la lame métallique (24) a une largeur (*l*), et les flasques (23) sont écartés d'une épaisseur (*e*), telles que ladite largeur (*l*) soit comprise entre un tiers de ladite épaisseur (*e*) et une fois ladite épaisseur (*e*).
